# NEW EUROPEAN PATENT SPECIFICATION

(11) **EP 0 567 191 B2**
(45) Date of publication and mention of the opposition decision: **03.01.2001**
(45) Mention of the grant of the patent: 18.06.1997
(21) Application number: 93201126.5
(22) Date of filing: 20.04.1993
(51) Int. Cl.: A01K 1/12, A01J 7/00

(54) **A construction for automatically milking animals**
Konstruktion zum automatischen Melken von Tieren
Construction pour la traite automatique d'animaux

(30) Priority: 21.04.1992 NL 9200714
(43) Date of publication of application: 27.10.1993
(60) Divisional application: 96203466.6
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 323 444
- EP-A- 0 332 229
- EP-A- 0 389 013

## Description

The present invention relates to a construction for automatically milking animals according to the preamble of claim 1. Constructions of this type are known for example, from EP-A-0,332,229. Since these constructions may be installed on or may be part of a location on a farm, they are not always universally usable; more in particular in a dairy farm the problem may be that the distance of an animal to the automatic milking machine might be undesirable large. The invention has for its object to obviate such disadvantages. Therefore, according to the invention, the construction is characterized by the features of the characterizing part of claim 1. This has the advantage that, by dividing the farm into several areas, the distance between an animal to be milked and the automatic milking machine becomes sufficiently short providing an advantageous milk production system. Further, the animals can automatically be milked in a pasture as well as in a cow building. The afore-mentioned separate areas of the farm may include a building and various portions of a pasture. Because of the fact that the construction is mobile, it can be set-up in a plurality of places both inside the farm buildings or cow shed and in a pasture; this flexibility in the location of the construction does not only provide a construction that is widely applicable but also results in a higher degree of operational reliability, i.e. an increased degree of certainty that a relatively large number of cows will be milked automatically the required number of times, for example three times, per 24 hours' period, in the cow shed and/or in a pasture. Preferably, the animals are milked when they move in a pasture from a first pasture section to a second pasture section. The entrances and the exits are arranged at lateral sides of the two compartments. Further, these compartments may have a feed trough which is connected to concentrated food storage means disposed on top of the construction. In a preferred embodiment the milking machine comprises only one milking robot which can be used in both compartments. Since the animals go either from the first pasture section via a compartment in the milking box to a second pasture section, or the other way round from said last second pasture section via the other compartment to said first pasture section, the presence of only one milking robot is sufficient; this milking robot is positioned in the centre of the partition of the two compartments and is movable under an animal standing in a compartment. The milking robot can be pivoted to under an animal in one compartment as well as under an animal present in the other compartment.

For a better understanding of the invention and to show how the same may be carried into effect, reference will now be made, by way of example, to the accompanying drawings, in which:
Figure 1 shows a farm land, of which an area intended for grazing by the animals is divided into separate pastures;
Figure 2 shows four pastures of this type and illustrates how a movable milking box is moved from one pasture to an adjoining pasture;
Figure 3 is a schematic view of a milking box consisting of two compartments;
Figure 4 shows the arrangement of a milking box on the boundary of the two sections into which a pasture is divided, as well as the expelling device;
Figure 5 is a plan view of the foldable fence mounted on the milking box, with the aid of which the said pastures can be defined and/or enclosed;
Figure 6 is a side view of the foldable fence shown in Figure 5;
Figure 7 shows a tractor with the milking box coupled thereto and the foldable arms for defining and/or enclosing a pasture and for providing the boundary between two sections, into which this pasture can be divided;
Figure 8 shows the set-up of a milking box having only one compartment in a pasture, which is divided into two sections with only a partial separation between these two sections, and
Figure 9 illustrates the manner in which the milking box can be set-up in a cow shed or a working area.

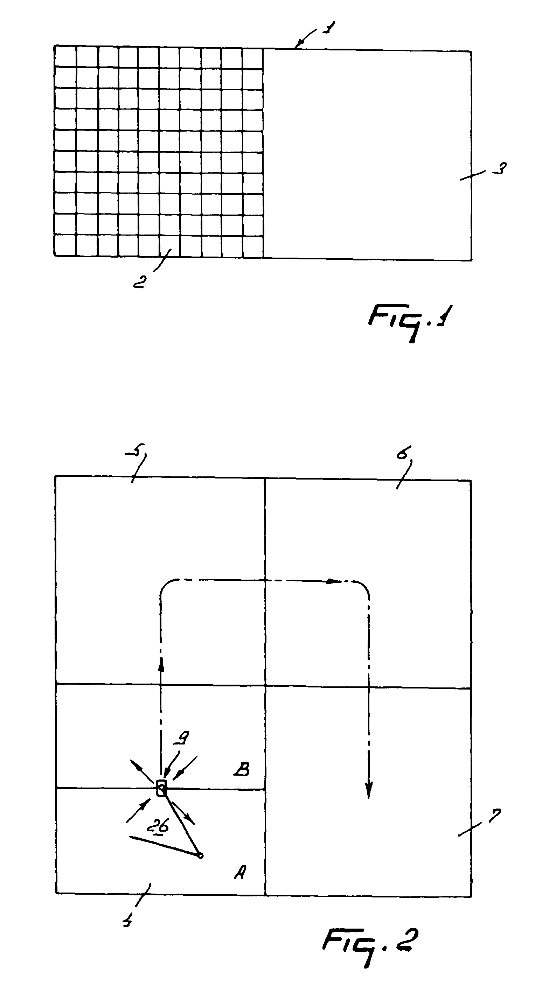

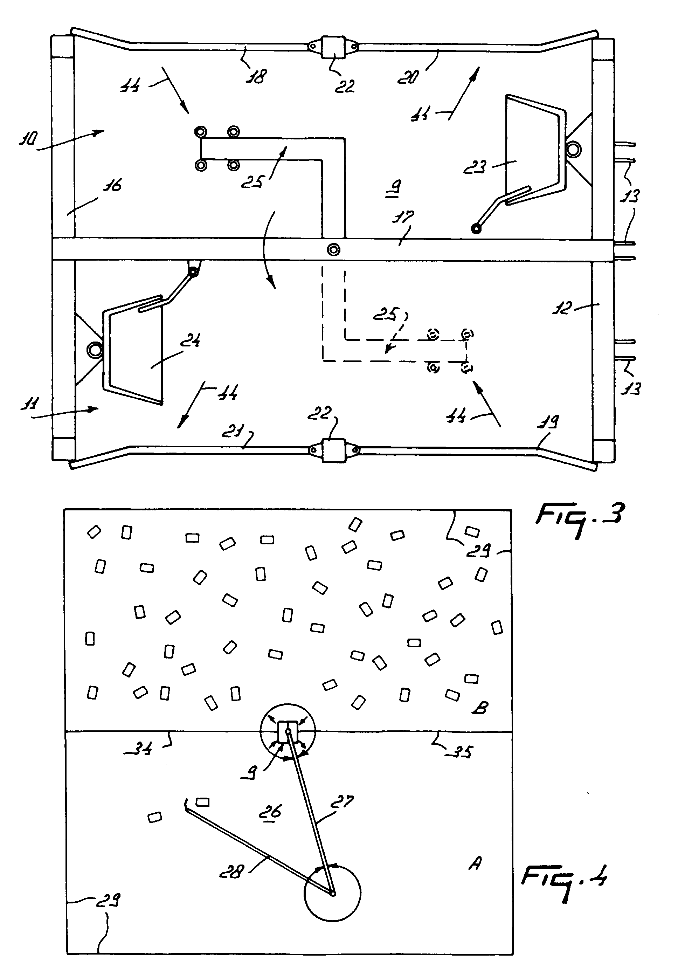

Figure 1 shows farm lands 1, of which an area 2 is divided into smaller sections of, for example, 50 x 50 metres. This subdivided area 2 of the farm lands is intended for grazing by the animals. As soon as such a smaller section, which forms a separate pasture, has been grazed by a number of animals present thereon, the animals can move to an adjoining pasture section, preferably via a milking box, in which they can be milked with the aid of a milking robot. In this manner the separate pastures can consecutively be systematically grazed, if necessary several times. The other section 3 of the farm lands is intended for harvesting fodder to be fed to the animals during the winter, when they will be in the cow shed. Figure 2 shows, to a different scale than in Figure 1, four pastures 4 - 7. In the left-hand corner of the pasture 4, in the centre, a construction 8 for automatically milking animals is schematically shown, so that during the period of time in which the animals can graze on this pasture they can be milked a number of times. Thereafter the animals present in both the pasture 4 and the automatic milking construction 8 can be moved to the pasture 5 shown in the left-hand top of the drawing. When also this pasture has been grazed, the animals as well as the automatic milking construction 8 can first be moved to the pasture 6 in the right-hand top portion in the drawing and to the pasture 7 shown in the right-hand bottom portion of the drawing. So as to keep the distance between the animals to be milked and the automatic milking construction 8 relatively small, the said construction is always moved together with the animals from one pasture to the other. By dividing a pasture into said smaller sections in which the animals can always stay for some time and because of the resultant shorter distance between animal and milking implement, the efficiency of the milk production procedure is highly increased.

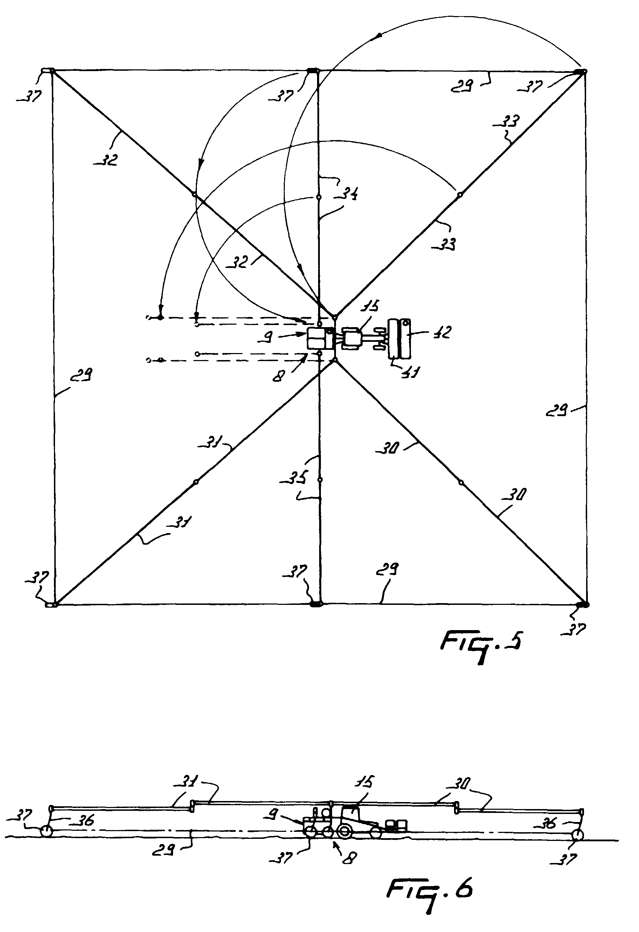

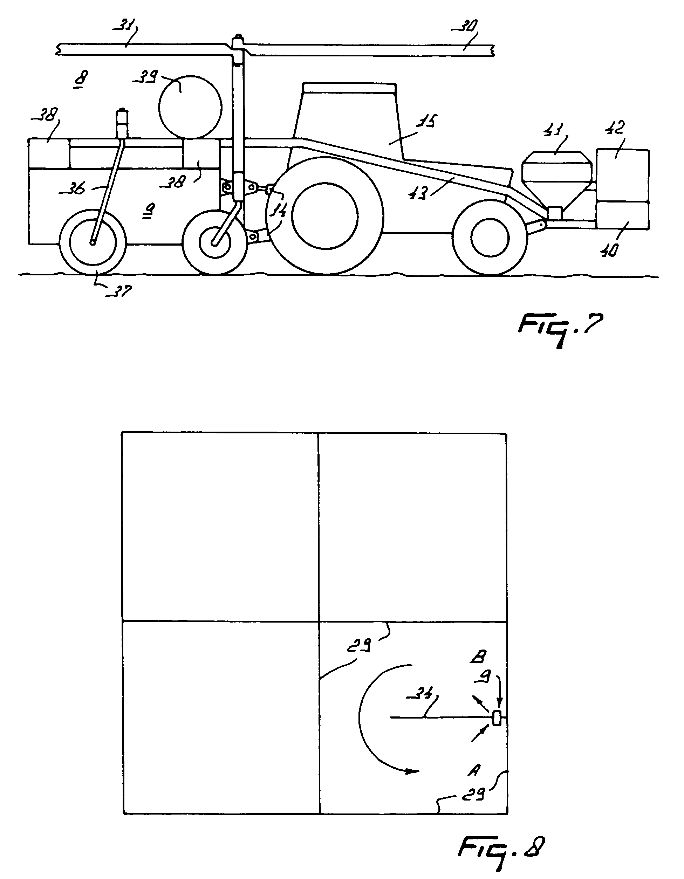

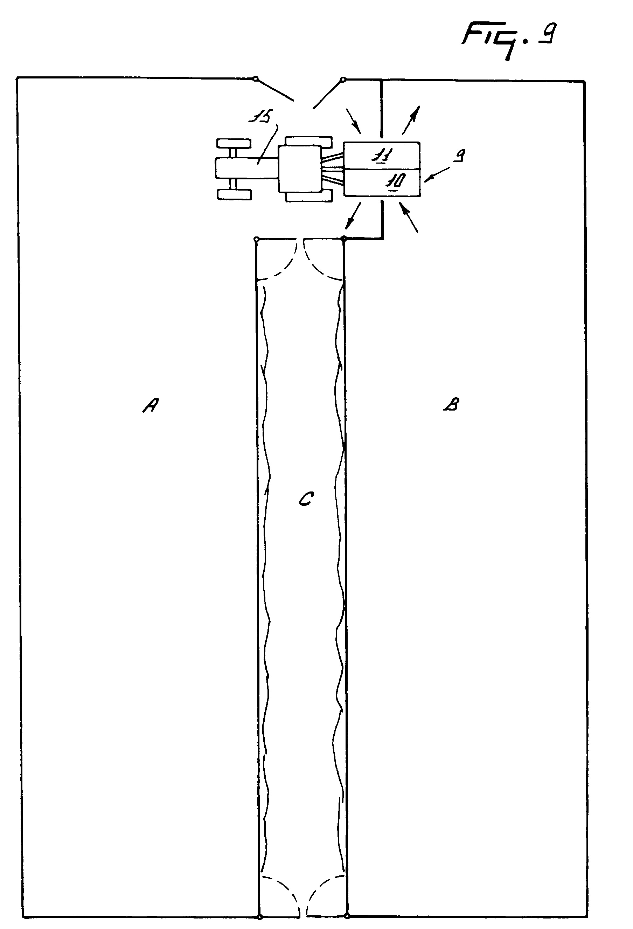

Figure 3 is a schematic view of a portion of the milking box 9 which forms part of the construction 8 and consists of two compartments 10 and 11. The milking box 9 has a front side 12 which is provided with coupling points 13 for coupling the milking box 9 to the lifting device 14 of a tractor 15 (see Figure 7) and to render it possible to move the milking box 9 with the aid of the tractor 15 from one pasture section to another. Taken in the longitudinal direction of the milking box, a fence 17 is provided to divide the milking box 9 into two compartments 10 and 11, each compartment 10, 11 having its own entrance 18 and 19, respectively, and its own exit 20 and 21, respectively. These entrances 18, 19 and exits 20, 21 are arranged at the sides of the milking box 9 and are connected to a frame portion located in the midway point of the lateral side. The two compartments 10 and 11 are of such an arrangement that an animal to be milked can only pass through a compartment in one direction. The direction in which the animal can walk through one compartment is then opposite to the direction in which the animal can walk through the other compartment. In Figure 3 this walking direction is schematically indicated by arrows 44. In each of the compartments 10, 11 there is a feed trough 23 and 24, respectively, while a milking robot 25 is set-up in the midway point of the dividing fence 17, arranged between the leading and trailing side 12 and 16, respectively, of the two compartments 10, 11. This robot preferably is a milking robot which is pivotal from one compartment to the other and which is only shown very schematically in Figure 3. The animals to be milked enter the left-hand compartment 10 via, for example, the entrance 18 in the left-hand bottom side, are supplied there with concentrated food, while the milking robot 25 is moved to under the animal's udder, the teat cups of this robot are connected to the teats of an animal and the animal is thus automatically milked. After milking the animal is guided via the left-hand top exit 20 from the left-hand compartment 10. The animals to be milked are allowed to enter the right-hand compartment 11 via the right-hand top entrance 19, while after the automatic milking operation they can leave this compartment 11 via the right-hand bottom exit 21. Figure 4 shows a pasture which is fenced off with the aid of electric fence wire. In the centre of this pasture area the milking box 9 which is shown in Figure 3 and comprises two compartments 10, 11 is set-up. The pasture area is divided into two sections A and B which are divided from each other in a manner still further to be described with the aid of an electric fence wire. The animals are positioned in one of the two sections and can proceed to the other section via the milking box 9. Animals present in the lower section A shown in Figure 4 can only arrive in the upper section B of Figure 4 via the left-hand compartment 10 of the milking box 9, while the animals present in the upper section B of Figure 4 can only reach the section A via the right-hand compartment 11 of the milking box 9. As concentrated food is fed to the animals in the milking box 9, optionally made attractive by the addition of flavourings, such as molasses, the animals will tend to move at said times from the pasture section where they are staying to the milking box 9. In principle the animals will go without being goaded from a section into the relevant compartment of the milking box 9 when this compartment is free and the entrance is open. In Figure 4 a large number of animals already milked are shown in the upper section B, while in section A there are still two animals which have not yet been milked. Should these animals have an insufficient tendency to enter the milking box 9, then using a special expelling device 26 these animals can be driven from the relevant section area to the milking box and from there to the other section. Before driving the animals from this section their position in section A can first be determined. For that purpose a rotating infrared sensor shown in the drawing may be provided on top of the milking box 9. With the aid of this infrared sensor a further portion of the expelling device 26 can be controlled. To that end the expelling device 26 comprises a first arm 27 which is pivotal about an upwardly directed shaft, while a second arm 28 which is pivotal relative to this first arm is provided at or near the end of this first arm 27. Pivoting of the two arms 27, 28 is effected with the aid of, for example, (now-shown) stepping motors, which are controlled on the basis of the signals produced by the infrared sensor. A descending electric fence wire is suspended at or near the end of the second arm 28. By the combined action of the infrared sensor and the arms 27, 28 controlled thereby and provided with electric fence wire, an animal can be driven from the section A to the milking box 9. When in this manner all the animals have arrived from section A in section B via the milking box 9 in which they have been milked, the animals can if so desired move again via the other compartment 11 of the milking box 9 from section B to section A. In this manner a circulation of the animals to be milked through the milking box can advantageously be obtained.

The pastures may have a permanent enclosure of electric fence wire. It is, however, alternatively possible for the farmer, when the animals are to move from one pasture to the other, to move the fence of the relevant pasture together with the animals. An efficient manner is however obtained when the milking box 9 is provided with a foldable fence 29, so that when the milking box is moved from one pasture to the other the fence automatically travels with it. A possible design of such a foldable fence is shown in Figure 5. The fence of a pasture is then formed by electric fence wire suspended from the ends of four foldable arms 30 - 33, which arms are of such a shape and attached such that the ends, when they are interconnected by a wire, enclose a square corresponding to the dimensions of the relevant pasture. Each of the arms 30 - 33 is foldable in a pivotal point located at approximately half the overall length of the arm, whilst an arm can furthermore, after it has been folded inwardly, that is to say folded double, be folded outwardly to the rear in the longitudinal direction of the milking box 9. Since the relevant pasture section must also be divided into two sections A and B, the milking box can also be provided with foldable arms 34, 35 to divide the pasture into two rectangular sections A and B. Although the arms 30 - 35 are fully foldable and can be hinged rearwardly for the purpose of transport, it may be advantageous to maintain the outwardly folded state when the milking box 9 is moved from one pasture to an adjoining pasture, as obviously the animals located in a section will then automatically move to a relevant section A or B of a subsequent pasture section in which the milking box 9 is then set-up. The ends of the arms 30 - 35 can be provided with supports 36 for ground wheels 37 for the purpose of supporting the outwardly folded and then relatively long arms 30 - 35 at their extreme ends. The electric fence wire 29 which either constitutes the enclosure of a pasture, or forms the division of such a pasture into two sections A and B, is attached to the supports, more specifically preferably at a height of approximately one metre above the soil. A side view of the milking box 9 moved by the tractor 15, the arms being in the outwardly folded state, is illustrated in Figure 6. The tractor 15 and the milking box 9 carried by the lifting device 14 of this tractor is shown to a slightly larger scale in Figure 7. In this Figure it is also shown that hoppers 38 for concentrated fodder are disposed on top of the milking box 9, while in addition a milk tank 39 is disposed on the roof of the milking box 9. In front of the tractor 15 storage tanks for water 40 for cleaning the teat cups and the milk pipe lines of the milking robot and for concentrated food 41 may be present, while a milk tank 42 may also be mounted. From the hopper for concentrated food 41 in front of the tractor, concentrated food can be blown to the spaces 38 above the milking box 9, via a supply pipe 43.

Figure 8 is a view of a pasture in which in the right-hand bottom corner a milking box 9 with only one compartment is arranged. The milking box 9 is moved to near the edge of the pasture, only one of the arms 34 being present to provide a partition between two sections A and B. The partition is shorter than the length of the sections A and B. This renders it possible for the animals to circulate from one section to the other section. In that case the animals pass through the milking box in only one direction.

Finally, Figure 9 shows a milking box 9 having two compartments 10, 11 set-up at the boundary between two sections A and B of a cow shed. The two sections A and B of this shed are divided from each other for the major part by a passage C, in which fodder for the animals can be deposited in the feeding gutters at the side of the passage C. Also in this case the animals circulate through the milking box from the section A to the section B and vice versa.

The manner in which the dairy farm, that is to say the cow shed as well as the pasture, is divided into separate areas, provides that the animals are always at a relatively short distance from the milking robot. Although there is fresh grass in the pasture and when the animals are in the cow shed fresh grass is available to them via the feed gutters, the circulation of the animals can be increased by adding flavourings to the concentrated fodder. The specific implementation of the milking box 9 such that it is suitable for use in both a cow shed and in a pasture, as well as the manner in which the various auxiliary means are provided on the milking box 9, more in particular the auxiliary means which ensure that a defined enclosure can be provided in the pasture, furthermore increase the usability of the automatic milking construction to a very considerable extent. The construction is ready for use throughout the year, wherever the animals are located.

The invention is not limited to the embodiment described here, but also comprises all possible modifications in sofar they are within the scope of the accompanying claims. The use of the construction is also in no way limited to a cow shed as illustrated in Figure 9, or to a pasture divided into sections as illustrated in Figure 1.

## Claims

1. A construction for automatically milking animals, such as cows, comprising a mobile milking box (9) with compartments (10, 11), each compartment having at the lateral side both a separate entrance (18, 19) and a separate exit (20, 21), the milking box (9) being provided with a milking machine with a milking robot (25), characterized in that said milking box has two compartments and that the respective entrances, as well as the exits, are arranged diagonally opposite to each other, such that the walking direction of an animal through one compartment is opposite to the walking direction of an animal through the other compartment so that, when the milking box (9) is placed between two separate areas on a farm, animals can go from a first area to the second area after being milked in one compartment and can go from the second area to the first area after being milked in the other compartment.

2. A construction as claimed in claim 1, characterized in that the two compartments (10, 11) have a feeding trough (23, 24) which is connected to a concentrated food hopper (38) disposed on top of the construction.

3. A construction as claimed in claim 1 or 2, characterized in that the milking machine comprises one milking robot (25) which can be used in both compartments (10, 11).

4. A construction as claimed in claim 3, characterized in that the milking robot (25) is positioned in the midway point of the partition between the two compartments (10, 11) and is movable to under an animal standing in a compartment.

## Patentansprüche

1. Vorrichtung zum automatischen Melken von Tieren, wie z. B. von Kühen, die eine verfahrbare Melkbox (9) mit Kammern (10, 11) hat, wobei jede Kammer an der Längsseite sowohl einen separaten Eingang (18, 19) als auch einen separaten Ausgang (20, 21) aufweist, und wobei die Melkbox (9) eine Melkmaschine mit einem Melkroboter (25) hat,
dadurch gekennzeichnet, daß die Melkbox zwei Kammern hat und die zugehörigen Eingänge und Ausgänge diagonal gegenüberliegend angeordnet sind, derart, daß die Laufrichtung eines Tieres durch die eine Kammer der Laufrichtung eines Tieres durch die andere Kammer entgegengesetzt ist, so daß bei Aufstellung der Melkbox (9) zwischen zwei separaten Bereichen auf einem Gehöft die Tiere nach dem Melken in der einen Kammer von einem ersten in den zweiten Bereich und nach dem Melken in der anderen Kammer von dem zweiten in den ersten Bereich gehen können.

2. Vorrichtung nach Anspruch 1,
dadurch gekennzeichnet, daß die beiden Kammern (10, 11) einen Futtertrog (23, 24) aufweisen, der mit einem auf der Vorrichtung angeordneten Kraftfutter-Behälter (38) verbunden ist.

3. Vorrichtung nach Anspruch 1 oder 2,
dadurch gekennzeichnet, daß die Melkmaschine einen Melkroboter (25) hat, der in beiden Kammern (10, 11) einzusetzen ist.

4. Vorrichtung nach Anspruch 3,
dadurch gekennzeichnet, daß der Melkroboter (25) in der Mitte der Trennwand zwischen den beiden Kammern (10, 11) positioniert und unter ein in einer Kammer stehendes Tier zu bewegen ist.

## Revendications

1. Construction pour la traite automatique d'animaux tels que des vaches, comprenant une stalle de traite mobile (9) avec des compartiments (10, 11), chaque compartiment ayant, à la fois, sur sa face latérale une entrée séparée (18, 19) et une sortie séparée (20, 21), la stalle de traite (9) étant pourvue d'une machine à traire avec un robot trayeur (25),
caractérisée en ce que ladite stalle de traite a deux compartiments et en ce que les entrées respectives, ainsi que les sorties, sont disposées en opposition diagonalement l'une à l'autre, de telle sorte que le sens de marche d'un animal traversant un compartiment est opposé au sens de marche d'un animal dans l'autre compartiment, de telle sorte que, quand la stalle de traite (9) est placée entre deux zones séparées dans une exploitation agricole, les animaux peuvent aller d'une première zone à la deuxième zone après avoir été traits dans un compartiment et peuvent aller de la deuxième zone à la première zone après avoir été traits dans l'autre compartiment.

2. Construction selon la revendication 1, caractérisée en ce que les deux compartiments (10, 11) ont une auge d'alimentation (23, 24) qui est reliée à une trémie (38) d'aliments concentrés disposée au-dessus de la construction.

3. Construction selon la revendication 1 ou 2, caractérisée en ce que la machine à traire comprend un robot trayeur (25) pouvant être utilisé dans chacun des deux compartiments (10, 11).

4. Construction selon la revendication 3, caractérisée en ce que le robot trayeur (25) est disposé au milieu de la cloison entre les deux compartiments (10, 11) et est mobile jusqu'en dessous d'un animal se tenant debout dans un compartiment.
